# EUROPEAN PATENT APPLICATION

(11) **EP 1 340 799 A1**
(43) Date of publication of application: **03.09.2003**
(21) Application number: 01982784.9
(22) Date of filing: 14.11.2001
(51) Int. Cl.: C10B 41/00, C10B 29/02, G01B 11/16, G01B 11/30, G01N 21/88

(54) **DEVICE AND METHOD FOR MEASURING WIDTH OF FURNACE**

(30) Priority: 14.11.2000 JP 2000347150; 10.07.2001 JP 2001209046
(71) Applicant: NIPPON STEEL CORPORATION, Tokyo 100-8071 (JP)
(72) Inventor: SUGIURA, Masato, NIPPON STEEL CORPORATION, Futtsu-shi, Chiba 293-8511 (JP); NAITO, Shuji, NIPPON STEEL CORPORATION, Futtsu-shi, Chiba 293-8511 (JP); KAJIYA, Takanori, NIPPON STEEL CORPORATION, Futtsu-shi, Chiba 293-8511 (JP); YOKOMIZO, Masahiko, NIPPON STEEL CORPORATION, Futtsu-shi, Chiba 293-8511 (JP); SAKAIDA, Michitaka, NIPPON STEEL CORPORATION, Futtsu-shi, Chiba 293-8511 (JP); EGAWA, Hizuru, NIPPON STEEL CORPORATION, Futtsu-shi, Chiba 293-8511 (JP)
(74) Representative: VOSSIUS & PARTNER
(86) International application number: JP0109966
(87) International publication number: WO02040615

(57) **Abstract**

The present invention provides an oven-width measuring apparatus which does not require any cooling water pipe so that the oven-width of a high temperature oven chamber such as a coke oven chamber can be measured rapidly and easily, and which is capable of resisting a high temperature during the time necessary for it to be in the oven chamber for the measurement. The oven-width measuring apparatus is used for measuring the distance between oven walls facing each other of an oven chamber, that is to say, the width of the oven chamber, and comprises a measuring unit 2 which includes an oven-width measuring instrument 8 and a power supply unit 10, and is accommodated in a endothermic box 3 the outside of which is covered with heat insulating material 4. The endothermic box 3 is a jacket filled with liquid 7 having endothermic ability, and the liquid 7 is preferably water. The measuring unit 2 also includes a data-recording unit 9, or a wireless transmitter 18 for transmitting the data of the measured oven-widths to an external data-recording unit 22. The endothermic box 3 is provided with an outlet, at the bottom thereof, from which the liquid 7 is discharged.

## Description

### Technical Field

The present invention relates to an apparatus for measuring the width of a high temperature oven chamber, such as a coke oven chamber, rapidly and easily.

### Background of the Invention

A coke oven chamber, and other high temperature oven chambers, have oven walls constituted by refractory materials, and the status of the deterioration of the refractory materials must be determined precisely. In particular, the coke oven chamber is usually operated, continuously, over a term of more than 20 years under a severe conditions, and the refractory brick constituting the coke oven chamber thus deteriorates gradually due to thermal, chemical and mechanical factors. For this reason, the pushing of the coke is clogged due to the deterioration of the refractory brick, or the refractory brick can drop off. Trouble such as the dropping off of the refractory brick affect the operation of the coke oven significantly because of the difficulty of repairing the coke oven. Thus, it is extremely important for the management of the operation of an oven to know, in particular, the state of the refractory brick constituting the oven walls of the coke oven chamber.

When the right and left oven walls face each other in parallel in a narrow oven chamber like a coke oven chamber, the wear of the refractory materials constituting the oven walls increases the distance between the oven walls, that is to say, the width of the oven chamber (called "oven-width" hereinafter). For this reason, the state of the wear of the refractory materials constituting the oven walls can be detected by measuring the distance between the both oven walls.

When installing a distance meter in an oven chamber to measure the distances between the distance meter and the oven walls to detect the state of the wear of the refractory materials, it is necessary to dispose it accurately at a fixed position in the oven chamber. On the other hand, when measuring the distance between the oven walls as described above with an oven-width measuring apparatus, a large error in the measured values does not resulted even if the position of the oven-width measuring apparatus is deviated from the fixed position in the side direction. Consequently, when measuring the distance between the oven walls, it is not required to locate an oven-width measuring apparatus in a fixed position strictly, and the oven-width can be measured with an oven-width measuring apparatus mounted on, for example, the pushing ram of a coke pusher.

Such an oven-width measuring apparatus is disclosed, for example, in Japanese unexamined patent publication No.62-293112. In this measuring apparatus, a pair or pairs of non-contacting distance meters each directed to the corresponding oven wall are mounted on the ram or the like of a coke pusher, and the distances from the distance meters to the right and left walls of a coke oven chamber are measured at the same time to determine the oven-width of the coke oven chamber, based on the total of the distances, continuously. The distance between the coke oven walls of the oven chamber can be measured continuously by moving the coke pusher horizontally.

In the oven-width measuring apparatus disclosed in the Japanese unexamined patent publication No.62-293112, distance meters using a laser, microwaves, or the like are used as the non-contacting distance meters. On the other hand, in the Japanese unexamined utility model publication No.2-13151 and the Japanese unexamined patent publication No.60-144384, a method of measuring the distance between the oven walls, in the same fashion as the above apparatus but by using contact type distance meters, is disclosed.

The measurement of the oven-width of a coke oven chamber is carried out a short time after the produced coke has been pushed out and before the next coal is changed during the operation of the coke oven. As the temperature in an oven chamber to which the oven-width is measured is high as a matter of course, and the oven-width measuring unit in an oven-width measuring apparatus is an electronic unit not capable of resisting high temperature, a countermeasure to limit the temperature rise of the oven-width measuring unit is required. In the oven-width measuring apparatus disclosed in the aforementioned Japanese unexamined patent publication No.62-293112, a distance meter is accommodated in a water-cooled jacket, and the cooling water pipes for supplying the cooling water to, circulating it in, and discharging it out of the water-cooled jacket are provided. Signal cables for conducting the result of the measurement by the distance meter to the outside of the oven are laid in the cooling water pipes to be protected against the high temperature environment. As the oven-width measuring apparatus moves as the pushing ram moves horizontally, the cooling water pipes are wound up on the take-up device and are drawn out as the oven-width measuring apparatus moves.

In the above method of using circulating water to cool the oven-width measuring apparatus, heavy assembling work and disassembling work are required when the oven-width measuring apparatus is mounted on and removed from the coke pusher, and it is thereby extremely difficult to carry out the measuring work in a short time during the operation of the coke oven.

An oven-width measuring apparatus comprising an oven-width measuring unit totally covered with heat insulating material is known. This measuring apparatus is inserted in an oven chamber for a extremely short time to measure the oven-width of the oven chamber, and is taken out of the oven chamber before the temperature of the oven-width measuring unit itself rises to the limit value. This oven-width measuring apparatus is compact and can be installed easily on a coke pusher or the like because it does not require any cooling pipe. As the measuring apparatus is not provided with a cooling pipe, a signal cable cannot be guided to the outside of the oven, and hence the measured oven-width data is stored in a data-recording unit in the oven-width measuring unit, and is taken out after the oven-width measuring apparatus has been taken out of the oven. A power supply unit for operating the electronic unit is also provided in the oven-width measuring unit.

In the above oven-width measuring apparatus, as the oven-width measuring unit is not cooled positively and the heat to it is blocked only with the heat insulating material, the time that the oven-width measuring apparatus is allowed to be in a high temperature oven like a coke oven is, at most, about 3 minutes. It usually takes about 3 minutes for the coke pusher to take only a round trip in an oven chamber after the coke pusher has been inserted into the oven chamber. For this reason, if the maximum time that the measuring apparatus is allowed to be in the oven chamber is 3 minutes, there is little margin of the time for the measurement, and hence if it takes more time to push out the coke, the electronic equipment such as the distance meter may be damaged. In addition, it is required to dissipate the heat stored in the heat insulating material by spending long time after measuring the oven-width every oven chamber.

### Disclosure of the Invention

It is therefore an object of the present invention to provide an oven-width measuring apparatus which does not require any cooling water pipe so that the oven-width of a high temperature oven chamber such as the coke oven chamber in a coke oven can be measured rapidly and easily and which is capable of resisting the high temperature during the time necessary to be in the oven chamber for the measurement. That is, the summary of the invention is as follows.
(1) An oven-width measuring apparatus for measuring the distance between oven walls facing each other in an oven chamber, wherein a measuring unit 2 for measuring the distance includes an oven-width measuring instrument 8 and a power supply unit 10, and is accommodated in an endothermic box 3 the outside of which is covered with heat insulating material 4.
(2) The oven-width measuring apparatus of item (1), wherein the endothermic box 3 is a jacket which is filled with liquid 7 having endothermic ability.
(3) The oven-width measuring apparatus of item (2), wherein the endothermic box 3 is provided with an inlet, at the top thereof, from which the liquid 7 is injected, and is provided with an outlet, at the bottom thereof, from which the liquid 7 is discharged.
(4) The oven-width measuring apparatus of item (2) or (3), wherein the liquid 7 is water.
(5) The oven-width measuring apparatus of any one of items (1) to (4), wherein the oven-width measuring instrument is a pair of laser distance meters each measuring the distance to the corresponding oven wall.
(6) The oven-width measuring apparatus of item (5), wherein a narrow-band optical interference filter is disposed forward of the laser light receiving window of each of the laser distance meters.
(7) The oven-width measuring apparatus of item (5) or (6), wherein the laser distance meter includes a timer to start the irradiation of laser light when the timer has counted up a preset value corresponding to the time required for mounting the oven-width measuring apparatus.
(8) The oven-width measuring apparatus of any one of items (1) to (7), wherein the measuring unit 2 includes a wireless transmitter 18 for transmitting measured oven-widths to an external data-recording unit 22.
(9) The oven-width measuring apparatus of item (8), wherein measured horizontal present positions 35 are recorded in the external data-recording unit 22 together with the measured oven-widths.
(10) The oven-width measuring apparatus of any one of items (1) to (7), wherein the measuring unit 2 includes a data-recording unit 9.
(11) The oven-width measuring apparatus of item (10), wherein the data-recording unit 9 starts to record the measured value when the measured value is a preset value corresponding to the oven-width.
(12) The oven-width measuring apparatus of item (10) or (11), wherein the measuring unit 2 includes a wireless receiver for receiving a measuring start time and measuring positions transmitted from outside the measuring unit 2.
(13) The oven-width measuring apparatus of any one of items (1) to (12), wherein a charging cable connecting plug 25 for charging the power supply unit 10 is provided at the outside of the endothermic box 3.
(14) The oven-width measuring apparatus of any one of items (1) to (13), wherein the oven-width of a coke oven chamber is measured.
(15) The oven-width measuring apparatus of item (14) being mounted on the ram 14 or the ram beam of a coke pusher 13 to measure the oven-width while the coke pusher 13 is traveling horizontally.
(16) The oven-width measuring apparatus of any one of items (5) to (15), wherein the external data-recording unit 22 or the data-recording unit 9 records the distance between each of the laser distance meters and the corresponding oven wall.
(17) A method of measuring the oven-width of an oven by using the oven-width measuring apparatus of any one of items (3) to (16), wherein the outlet 23 is opened after the measurement of the oven-width of one oven chamber to discharge the liquid 7 in the endothermic box, and then new liquid is injected into the endothermic box to measure the oven-width of the next oven chamber.
(18) A method of measuring the width of an oven by using the oven-width measuring apparatus of any one of items (3) to (16), wherein the power supply unit is charged after the measurement of the oven-width of one oven chamber, and then the oven-width of the next oven chamber is measured.

In the present invention, as the outside of the oven-width measuring apparatus 1 is covered with the heat insulating material 4, the thermal conduction into the oven-width measuring apparatus can be extremely reduced even in a high temperature oven chamber. Furthermore, in the present invention, an endothermic box 3 is disposed between the heat insulating material 4 and the internal measuring unit 2. As the endothermic box 3 itself has an endothermic ability, the heat conducted inward through the heat insulating material 4 around the oven-width measuring apparatus 1 is absorbed by the endothermic box 3, and hence a temperature rise of the measuring unit 2 in the endothermic box can be delayed. For this reason, the oven-width measuring apparatus 1 can stay for at least five minutes in a high temperature oven, and hence when the oven-width measuring apparatus 1 is mounted on, for example, the pushing ram 14 of the coke pusher 13 to measure the oven-width of an oven chamber, the oven-width can be measured with time to spare. Furthermore, an oven-width measuring apparatus according to the present invention does not require any cooling water pipe and signal cable and, therefore, can be mounted on and removed from a pushing ram 14, etc. with extreme ease.

### Brief Description of the Drawings

Fig.1 is a cross-sectional plane view showing an oven-width measuring apparatus according to the present invention disposed in an oven chamber.
Fig.2 is a cross-sectional view showing an oven-width measuring apparatus according to the present invention attached to the pushing ram of a coke pusher inserted in a coke oven chamber.
Fig.3 is a cross-sectional view showing an oven-width measuring apparatus according to the present invention disposed in an oven chamber.
Fig.4 is a cross-sectional view showing an oven-width measuring apparatus according to the present invention attached to the pushing ram of a coke pusher inserted in a coke oven chamber.
Fig.5 is a cross-sectional side view of an endothermic box according to the present invention.
Fig.6 is a conceptual connection diagram of an oven-width measuring apparatus according to the present invention including a wireless transmitter and receiver.

### Best Modes for Carrying Out the Invention

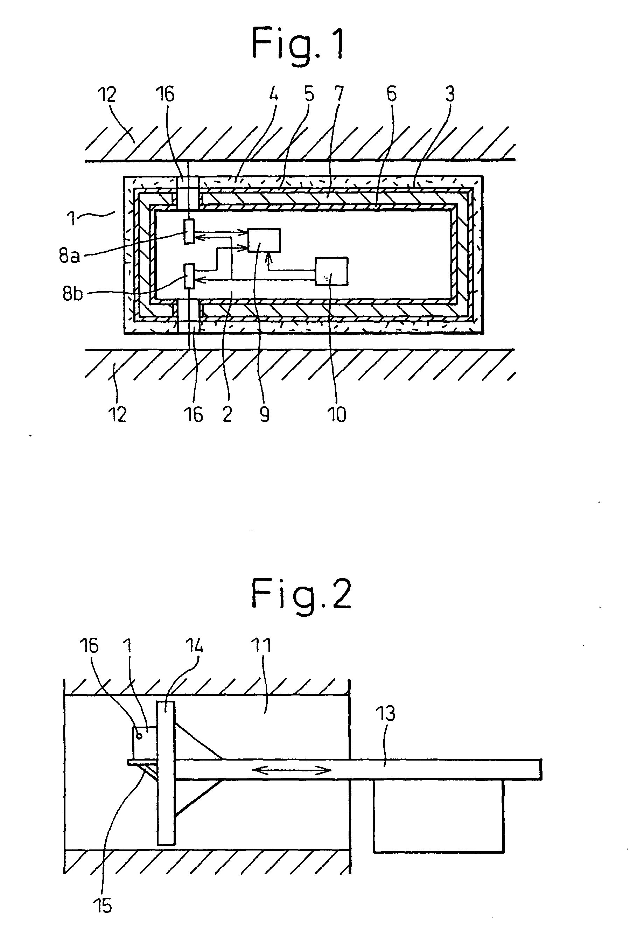

The present invention will be described with reference to Fig.1 to Fig.6.

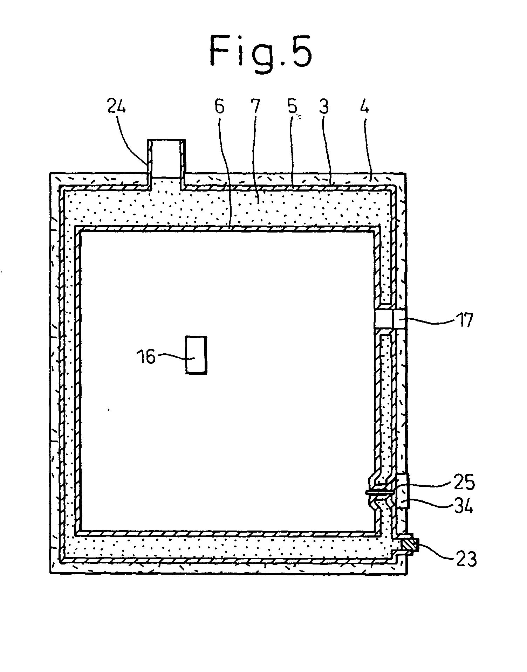

Endothermic material having endothermic ability is used for the endothermic box 3. Endothermic material having large heat capacity per unit weight and unit volume is required. Metal may be used for the endothermic material, but it is preferable that the endothermic box 3 is a jacket filled with liquid 7 which functions as the endothermic material. In Fig.1, the endothermic box 3 consists of an outer box 5 and an inner box 6 to be a jacket filled with the liquid 7 between the outer box 5 and the inner box 6. In general, liquid having a large heat capacity per unit weight and unit volume may be selected. It is preferable to use water which can obtained industrially with ease. Water has large heat capacity, thus being able to delay the temperature rise in the endothermic box. Furthermore, water boils at 100°C and removes much heat by evaporation during boiling, and thereby the temperature inside the endothermic box does not exceed 100°C. In order to release the steam when the water starts to boil at 100°C, an opening or a relief valve is preferably provided on the top of the endothermic box 3. As shown in Fig.5, an opening which also serves as a cooling water inlet 24 may be provided. An oven-width measuring apparatus according to the present invention is characterized in that no pipe for supplying and discharging the liquid is connected to it during the measurement of the oven-width in the oven.

When the oven-width measurement is carried out for the coke oven chamber with an oven-width measuring apparatus according to the present invention mounted on, for example, a coke pusher, the coke pusher continuously repeats, at 5 to 10 minutes intervals, the operation of pushing out the coke in one coke oven chamber after another where the carbonization has been completed while moving on the rail. During this operation, the oven-width measurement is carried out for a number of coke oven chambers. As the temperature of the liquid in the endothermic box 3 has risen after the measuring apparatus was inserted in one coke oven chamber, if it is inserted, without time delay, into the next coke oven chamber to carry out the measurement, the temperature of the liquid 7 in the endothermic box 3 rises successively, and the time that the endothermic box is allowed to stay in the oven becomes short accordingly. As shown in Fig.5, an outlet 23 for discharging the liquid in the endothermic box 3 according to the present invention is provided at the bottom of it, and when each of the measurements in the oven has been completed, the liquid 7 the temperature of which has risen is discharged and new liquid at a low temperature is inserted into the endothermic box 3 and, thereby, the temperature of the liquid 7 does not rise more than the limit value. Discharging the liquid in the endothermic box 3 continuously while supplying new cooled liquid into the endothermic box 3 from the inlet 24 lowers also the temperature of the endothermic box itself. Consequently, sufficient time can be secured every time the measurement is carried out.

A ceramic fiber board, calcium silicate board, or the like may be used as the heat insulating material 4 for covering the outside of the endothermic box 3. The oven-width of a coke oven chamber is usually about 400 mm, and hence the width of an oven-width measuring apparatus according to the present invention should be less than this oven-width. If water is used as the endothermic material, the widths of the right and left spaces to accommodate the water in the jacket are designed to be between about 40 mm and 60 mm. As the heat insulating material 4 covering the outside of the endothermic box, for example, a ceramic-fiber board is used, and the thickness of the ceramic-fiber board 4 may be between about 40 mm and 60 mm. When the external dimension of the oven-width measuring apparatus 1 is 620 mm (L) × 360 mm (H) × 550 mm (H), the dimension of the internal space accommodating the measuring unit 2 is about 420 mm (L) × 160 mm (W) × 310 mm (H).

When the oven-width measuring apparatus 1 having such a shape is inserted into a coke oven chamber of a coke oven at an internal temperature of 1000°C, the temperature in the internal space of the oven-width measuring apparatus 1 in which the measuring unit is accommodated becomes 25°C after 3 minutes, 40°C after 5 minutes, and 55°C after 7 minutes from the insertion. As the upper limit of the temperature at which the measuring unit can be used is usually 50°C, the oven-width measuring apparatus 1 is allowed to stay for at least 5 minutes in a high temperature oven chamber. Further, when the measurement for one oven chamber takes 2 minutes, the time required for the round trip of the oven-width measuring apparatus in a 15m-deep oven chamber is about. 2 minutes, and the temperature in the internal space rises about 15°C every time the measurement is carried out. When the temperature of the water is set to 0°C beforehand, in case that continuous measurement is performed, 3 measurements can be carried out continuously because the temperature rise is 15°C × 3 = 45°C.

The measuring unit 2 accommodated in the oven-width measuring apparatus 1 includes an oven-width measuring instrument 8, a power supply unit 10 and a data-recording unit 9 as required.

As the oven-width measuring instrument 8, a non-contacting distance meter is preferably used. As the non-contacting distance meter, a laser distance meter, a microwave distance meter, or the like may be used. In case that a laser distance meter is used, at least a pair of laser distance meters are provided, and each of the laser distance meters is directed to the corresponding wall to measure the distance between each of the laser distance meters and the corresponding wall. By adding the distances from the laser distance meters measured in such a manner, the oven-width can be calculated.

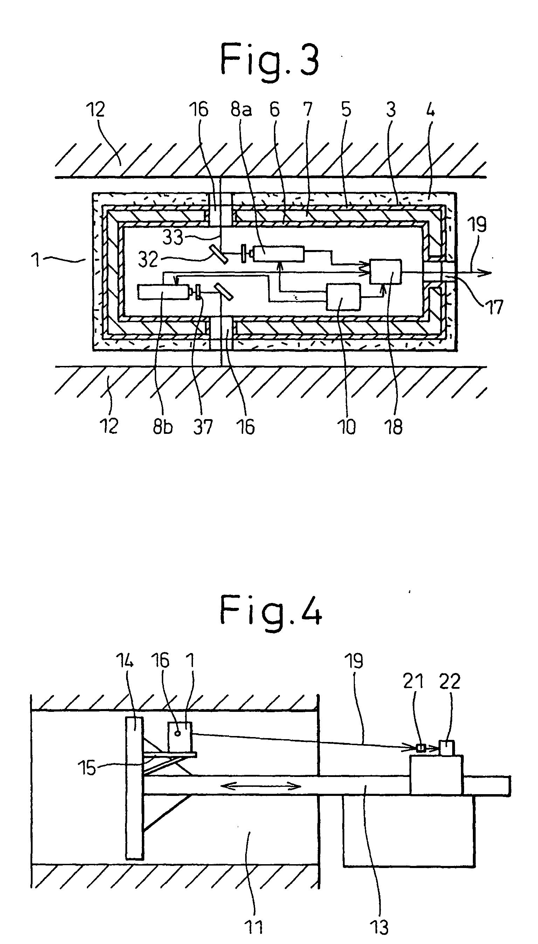

In case that a non-contacting laser distance meter or the like is used, the endothermic box 3 and the heat insulating material 4 covering the outside of the endothermic box 3 are provided with a window 16 at the both sides thereof so that the laser light from the laser distance meter is irradiated to an oven wall 12 and the reflected light from the oven wall 12 is conducted to the laser distance meter. A pane of heat resisting glass such as quartz glass is attached to the windows 16. The heat resisting glass preferably has a function, added in the manner of dielectric substance evaporation or the like, of reflecting the radiant heat from the outside. Furthermore, it is preferable to provide, as shown in Fig.3, a narrow-band interference optical filter 37 forward of the laser-light receiving window of each of the laser distance meters. The narrow-band interference filter 37 is a band-pass optical filter with a bandwidth of a center wavelength plus/minus about 10 nm and allows only the laser light of particular wavelengths of the laser light reached it to pass through it. A narrow-band interference optical filter whose center wavelength is the wavelength of the laser used for the laser distance meter is used to filter out the light of the wavelength which affect the measuring accuracy of the laser distance meter, and thereby the required measuring accuracy of the laser distance meter is secured.

Since the laser distance meter 8 has a certain length in the direction of the light axis, and the oven-width of a coke oven chamber, etc. is very small, it may be difficult to arrange two of the laser distance meter coaxially in the direction of the oven-width. As shown in Fig.3, when the laser distance meters 8 are arranged in the longitudinal direction of an oven chamber and the directions of the light axes are changed by reflecting the lights by mirrors, the measurement in an oven chamber with a small width is possible.

As an oven-width measuring apparatus according to the present invention cannot be provided with a signal cable wired to outside an oven, the data measured in the oven is recorded in the data-recording unit 9 disposed in the measuring unit, and the recorded data is referred to after the measurement has been completed and the oven-width measuring apparatus 1 has been taken out of the oven. The data-recording unit 9 may be any one of a magnetic storage device such as a magnetic disk, a semiconductor storage device such as a LSI card, an optical storage device, a magneto-optical storage device, etc.

When measuring the oven-width while moving the oven-width measuring apparatus horizontally in a coke oven chamber of a coke oven, it is necessary to bring each of the horizontal measuring positions into correspondence with the oven-width measured at the position. During the measurement, the measuring unit 2 is not given the horizontal present measuring position. Hence, during the measurement, for example, the present time and the corresponding measured oven-width data are recorded in the data-recording unit 9 of the measuring unit, while the present time and the corresponding present position data in the horizontal direction of the coke pusher are recorded at the outside of the oven, and after the measurement has been completed the both data are coupled with the present time as a parameter, and thereby it is possible to bring each of the horizontal measuring positions into correspondence with the oven-width measured at the position.

When the oven-width measuring apparatus is still outside the oven, the measured oven-width is very large. When the oven-width measuring apparatus moves horizontally and enters the oven, the measured oven-width suddenly changes to substantially the same value as the actual oven-width and, thereby, the oven-width measuring apparatus itself may recognize the time when it starts to enter the oven. Hence, in case that the moving speed of the coke pusher is constant, it is possible to bring the data from the time when the oven-width measuring apparatus starts to enter the oven into correspondence with each of its positions in the oven, by using the time when the oven-width measuring apparatus starts to enter the oven, as recognized by the oven-width measuring apparatus itself.

As shown in Fig.3 and Fig.4, a wireless transmitter 18 may be disposed instead of the data-recording unit 9 in the measuring unit, and the measured data may be transmitted outside the oven to be recorded in an external data-recording unit 22 disposed outside the oven. As the wireless transmission, radio transmission using electromagnetic waves or wireless transmission using light such as visible light or infrared rays may be used. In case that wireless transmission is used, a window 17 for the transmission is provided on the wall of the endothermic box facing outside the oven. A pane of heat resisting glass is coated with non-conductive material such as silica in order to prevent the invasion of the radiant heat from the outside of the oven-width measuring apparatus.

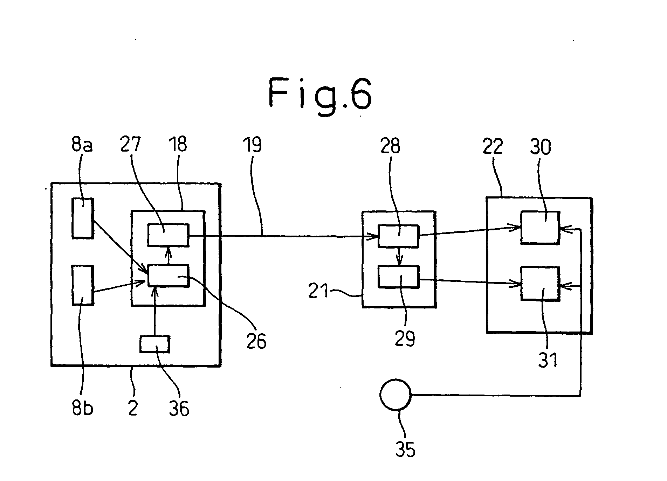

As shown in Fig.6, a digital radio transmitter 27 and receiver 28 for transmitting digital signals by radio waves may be adopted for the wireless transmission. The laser distance meter 8 outputs an analog distance signal, which is converted to a digital signal with an A/D converter 26, and then this digital signal is transmitted with the digital radio transmitter 27 and is received with the digital radio receiver 28 disposed outside the oven. The received digital signal is converted to an analog signal with a D/A converter 29 to be output to a recorder such as a data display 31, or is recorded in a recorder such as a recording computer 30 as it is.

In case that a wireless transmitter 18 is disposed in the measuring unit, the measured oven-widths are transmitted from the measuring unit to the external wireless receiver 21, and then are recorded in the external data-recording unit 22. At that time, the measured oven-widths and the horizontal present measuring positions in the oven may also be recorded at the same time. This is because, as the external data-recording unit 22 is disposed outside the oven, present measuring positions 35 of the oven-width measuring apparatus can be calculated based on the present positions of the coke pusher 13 and recorded in the external data-recording unit 22. As a result, it becomes possible to bring the horizontal measuring positions into correspondence with the measured oven-widths, and thereby damaged points and points to be repaired in the oven can be identified during the measurement. The wireless transmitter 18 can also transmit the oven-widths, which have been converted from the distances measured with a pair of laser distance meters, to the external data-recording unit 22, and of course can also transmit the distances measured with each of the laser distance meters as it is so that the oven-width is calculated with the external data-recording unit 22.

In case that the wireless transmitter 18 is disposed in the measuring unit, a thermometer for measuring the temperature of the measuring unit 12 and/or the temperature of the liquid in the endothermic box may be further provided and the temperatures measured by the thermometer may be transmitted outside the oven with the wireless transmitter 18. Consequently, the present temperature of the oven-width measuring apparatus can be detected at the outside of an oven, and when the temperature approaches the upper limit of the management, the measurement can be stopped to take the oven-width measuring apparatus out of the oven, and hence damage to the oven-width measuring apparatus due to an abnormal high temperature can be prevented.

In contrast to the above, the data-recording unit 9 and the wireless receiver may be disposed in the measuring unit, so that the time when the measuring unit starts to enter the oven and the horizontal present measuring positions 35 in the oven are always transmitted from the outside to the measuring unit by wireless communication, and the measured oven-widths and the horizontal present measuring positions 35 in the oven are recorded at the same time in the data-recording unit 9 in the measuring unit.

A transmitter-receiver having both of transmitting and receiving functions may be used instead of the wireless transmitter 18 and the wireless receiver 21.

As an oven-width measuring apparatus 1 according to the present invention cannot be supplied with the operating power from the outside during the measurement, the measuring unit is provided with a power supply unit 10. The oven-width measuring instrument 8, data-recording unit 9, and wireless transmitter 18 are operated by the power supplied from this power supply unit 10. As the power supply unit 10, a dry battery, rechargeable battery, or the like may be used.

When a non-rechargeable battery is used as the power supply unit 10, it is necessary to open the endothermic box every the battery is exchanged. Also, when a rechargeable power supply unit is used as the power supply unit 10, and a charging cable connecting plug is disposed in the endothermic box, it is necessary to open the endothermic box every the power supply unit 10 is recharged. When a rechargeable power supply unit is used as the power supply unit 10, and a charging cable connecting plug 25 is provided at the outside of the endothermic box 3 as described in the above item (13) of the present invention, the power supply unit can be recharged without opening the endothermic box, and the workability is improved accordingly. The charging cable connecting plug 25 may be covered with a cover 34 of heat insulating material before the oven-width measuring apparatus 1 is inserted into an oven, and only the cover 34 may be removed so that a charging cable is connected to the plug 25 when charging the power supply unit 10.

When an oven-width measuring apparatus 1 according to the present invention is attached to, for example, the pushing ram 14 of the coke pusher 13 at a certain height as shown in Fig.2, and the oven-width is measured while the coke pusher 13 is moved horizontally in a coke oven, and the measured values are recorded in the recording unit 9, the oven-widths at a certain height in the coke oven can be measured and recorded continuously. As an oven-width measuring apparatus 1 according to the present invention is compact in shape and light, and does not require any cooling pipe, etc., it is easy to freely change the height at which the oven-width measuring apparatus 1 is mounted on the coke pusher 14, and the oven-widths in all levels of the oven may be measured by changing the mounting position every predetermined level for the measurement.

When a device other than a coke pusher, such as an in-oven measuring apparatus, which can be inserted in a coke oven chamber, is provided, the oven-width measurement may be performed with an oven-width measuring apparatus according to the present invention mounted on the device in the same fashion as mounted on a coke pusher.

As described above, an oven-width measuring apparatus according to the present invention which measures the distance between oven walls facing each other in an oven chamber can measure the distance without accurately deciding its position in the direction of the oven-width of the oven chamber, thereby being convenient in the measurement in case that its position in the direction of the oven-width of an oven chamber can not be decided accurately. On the other hand, in the invention described in the above item (5) wherein the oven-width measuring instrument is a pair of laser distance meters each measuring the distance to the corresponding oven wall 12 of an oven chamber, if the position of the oven-width measuring apparatus in the direction of the oven-width of the oven chamber can be decided accurately, the states of the surfaces of the light and left walls can be evaluated directly from the distances to the walls measured with the laser distance meters without calculating the oven-width from the result of the measurement by the pair of laser distance meters, which provides a more advantageous measurement. The present invention may be applied also when such an evaluation of oven wall surfaces is conducted. That is, it becomes possible that the state of the wear of each of oven walls facing each other is evaluated individually and the optimum repairing plan for each of the oven walls is devised by recording the distance between each of the laser distance meters and the corresponding oven wall instead of the measured oven-widths by an external data-recording unit 22 or a data-recording unit 9 as described in the above item (16) of the present invention.

In order to measure the oven-width of a coke oven chamber correctly, the carbon adhered to the oven walls 12 is removed before the oven-width will be measured. The carbon is removed in the manner of burning off or the like. When the oven-widths before and after removing the carbon adhered to the oven walls are measured, and the results of the measurement are compared, the thickness of the carbon adhered to the oven wall can be obtained.

If there is a broken joint on an oven wall, the measured oven-width at the broken joint is abnormally large, and the broken joint can be detected accordingly with an oven-width measuring apparatus according to the present invention. Consequently, serious deterioration of an oven wall can be detected with an oven-width measuring apparatus according to the present invention.

### Embodiments

### (First Embodiment)

The oven-width measuring apparatus shown in Fig.1 is used to measure the oven-widths of the coke oven chambers of a coke oven. The outer dimensions of the oven-width measuring apparatus 1 are a height of 550 mm, a width of 360 mm, and a length of 620 mm, and the total weight is approx. 50 kg.

A ceramic-fiber board is used as the heat insulating material 4 covering the outside of the oven-width measuring apparatus, and the thickness of it is 50 mm. An endothermic box 3 of jacket structure consisting of an outer box and inner box made of stainless steel is provided inside the heat insulating material 4. The inside of the jacket is filled with water 7 of 25 liters in total. The thickness of the water layer is 45 mm at the portions of the endothermic box 3 facing the oven walls. A pair of laser distance meter as an oven-width measuring instrument 8 is disposed in the measuring unit 2 in the endothermic box 3. The laser distance meters 8a and 8b measure the distances to the right and left oven walls 12 respectively. In order to secure the light paths from the laser distance meters to the oven walls, a window 16 is provided at the portions of the endothermic box 3 and the heat insulating materials 14 facing the right and left oven walls, and a pane of quartz glass on which dielectric substance is evaporated is set in the window 16.

A small computer is provided as the data-recording unit 9 in the measuring unit 2 and a rechargeable battery is provided as the power supply unit 10 for supplying power to the laser distance meters 8, data-recording unit 9, and the control unit controlling them.

The oven-width measuring apparatus 1 is mounted on the front or rear of the pushing ram of the coke pusher 13. In this embodiment, as shown in Fig.2, it is mounted on the front of the pushing ram by means of a supporter 15. As the total weight of the oven-width measuring apparatus 1 is relatively small, approx. 50 kg, and it does not require any cooling water pipe and signal cable, it can be mounted easily at a given level on the pushing ram 14. In this embodiment, by setting the mounting position of the oven-width measuring apparatus 1 to the four levels of the pushing ram and measuring the oven-widths at the four levels in order, the oven-widths regarding the whole surface of the oven walls in the coke oven chamber can be measured.

The oven-width measuring apparatus 1 is mounted at a predetermined position of the pushing ram 14. A timer is provided so that the laser light is not irradiated during the mounting. It starts to irradiate the laser light after the timer has counted up to a preset time, and the coke pusher 13 starts to enter the oven at a predetermined speed. As the measured oven-width becomes substantially the same value as a predetermined oven-width when the laser distance meter enters the oven, the time when it enters the oven can be detected. After that, the coke pusher 13 is moved horizontally at a constant speed, and oven-widths are measured along the whole length of the oven walls 12. The measured oven-widths are recorded in the data-recording unit. As the time that the oven-width measuring apparatus 1 is allowed to stay in an oven chamber is 5 minutes, the coke pusher 13 is quickly taken out of the oven after the completion of the measurement. It usually takes about 3 minutes from the start of the insertion to the completion. When the temperature of the measuring unit 2 in the endothermic box and the temperature of the water 7 in the jacket of the endothermic box were measured, the temperatures of the measuring unit 2 and the water were 15°C and 15°C respectively at the start of the insertion, and were 25°C and 30°C respectively after 3 minutes had past since the start of the insertion. As the upper limit of the temperature at which the measuring unit is allowed to be used is usually 50°C, the temperature rise during the measurement is within the allowable limit.

After the measurement, the oven-width measuring apparatus 1 is removed from the pushing ram and the data recorded in the internal data-recording unit 9 is read out to an external analyzer. As the time when it enters an oven chamber, and the oven-widths measured at the measuring times after the start of the insertion, are recorded, the oven widths at the positions in the horizontal direction in the oven chamber can be obtained by comparing the insertion speed of the pushing ram with the recorded data. For the worn portions of the bricks of the oven walls recognized by a visual inspection, the measurement of an oven-width is performed at about three height levels, and then the oven-widths of the oven in good condition and the measured oven-widths are compared. By this comparison, the contour lines of the amount of the wear at the worn portions of the bricks of the oven walls can be drawn. As the result of this, a repairing plan including a repairing method and repairing time can be devised when the worn portions are repaired and, thereby, the efficiency of the repairing is improved.

### (Second Embodiment)

The oven-width measuring apparatus shown in Fig.3 to Fig.6 is used for the same purpose as the first embodiment. The second embodiment is different from the first embodiment in the following points:
- A wireless transmitter 18 is provided instead of the data-recording unit 9 in the measuring unit;
- A wireless receiver 21 and an external data-recording unit 22 are provided outside the oven;
- The endothermic box 3 is provided with an outlet 23 for the cooling water at the lower part and an inlet for the cooling water, which also serves as an opening, at the upper part;
- The endothermic box 3 is provided with a charging cable connection plug 25 at the outside thereof;
- Two laser distance meters 8 are disposed in the longitudinal direction in a coke oven chamber and the laser beams are reflected in the direction of right angle by mirrors 25; and
- A narrow-band interference optical filter 37 as an optical filter is disposed forward of each of the laser distance meters 8.
Detail descriptions about other portions in common with the first embodiment are omitted.

Radio communication using radio waves of digital signals is adopted as the wireless communication. The outputs of the two laser distance meters 8 and the output of the thermometer 36 for measuring the temperature in the measuring unit are converted to digital signals with the A/D converter 26 and then sent to the digital signal radio transmitter 27 via an RS-232C interface. The digital signal radio transmitter 27 functions as the wireless transmitter 18 to transmit the wireless transmission signal 19 to the wireless receiver 21 disposed outside the oven. The endothermic box 3 is provided with a window at the portion where the radio waves pass through, and a pane of quartz glass coated with silica is attached to the window 17. The window intercepts the radiant heat from the oven by the silica coating and does not interrupt the transmission of the radio waves.

A digital signal radio receiver 28, as the wireless receiver 21, is disposed outside the oven, and a recording computer 30 and a data display 31 are provided as the external data-recording unit 22. The digital signal received with the digital signal radio receiver 28 is transmitted to the D/A converter 29 and the recording computer 30 via an RS-232C interface. The data transmitted to the recording computer 30 is recorded in it. The analog signal output from the D/A converter 29 is transmitted to the data display 31 on which the oven-widths measured in real time are indicated. As the present measuring positions obtained based on the present positions of the pushing ram 14 have also been transmitted to the external data-recording unit 22, these positions are also transmitted to the recording computer 30 and the data display 31. On the data display 31, the present measuring positions of the oven-width measuring apparatus are shown with the horizontal axis and the measured oven-widths are shown with the vertical axis, and the points at which the measured oven-widths are abnormal can be identified.

In the first embodiment, it is required that part of the endothermic box 3 is opened after the completion of the measurement and then a cable is connected to the data-recording unit 9 in order to read out the data in it to an external analyzer, but, in the second embodiment, the measured data is transmitted to the external data-recording unit 22 in order during the measurement, and hence it is not required to open the endothermic box 3 after the completion of the measurement, and the workability of the measuring is substantially improved accordingly. Furthermore, since abnormal oven-widths in the oven can be detected in real time during the measuring and the points at which abnormal oven-widths have been detected can be identified correctly, the repairing plan for the concerned coke oven chamber can be devised without delay.

After the oven-width measuring for one coke oven chamber has been completed and before the oven-width measuring for the next coke oven chamber will be carried out, the outlet 23 at the lower part of the endothermic box is opened, and then the cooling water 7 the temperature of which has risen is discharged when the water at the ordinal temperature is poured into the endothermic box from the inlet 24 at the upper part. After the water of 15 liters has been poured to the endothermic box 3 to reduce the temperature of it, the outlet 23 at the lower part of it is closed and it is filled with water 7. As described above, the temperatures of the endothermic box 3 and the water 7 in the endothermic box 3 is reduced sufficiently every time, and then the next measurement is carried out, and hence a measuring time of more than 5 minutes can be ensured every time when the measurements of the oven-widths of coke oven chambers are carried out continuously.

The rechargeable battery used as the power supply unit 10 in the measuring unit has a capacity sufficient for the continuous oven-width measuring for five coke oven chambers. As the rechargeable battery can be charged by connecting a charging cable to the charging cable connecting plug 25 disposed at the outside of the endothermic box, it is not necessary to open the endothermic box for the charging, and thereby the charging can be carried out with good workability.

### Industrial Applicability

As an oven-width measuring apparatus according to the present invention accommodates a measuring unit in an endothermic box having endothermic ability, and the outside of the endothermic box is covered with heat insulating material, the temperature of the measuring unit can be kept at a certain value or less even if the endothermic box stays for relatively long time in a high temperature oven such as a coke oven. Thus, it becomes possible to carry out the measurement of the oven-width in an oven chamber with sufficient time. Furthermore, an oven-width measuring apparatus according to the present invention does not require any cooling water pipe and signal cable, thereby being rapidly and easily mounted on and removed from the device such as a pushing ram for inserting the measuring apparatus into, and moving it in, an oven.

Furthermore, an oven-width measuring apparatus with a wireless transmitter according to the present invention has a good workability because it is not necessary to open the endothermic box for the purpose of extracting the measured values after the measurement. The oven-width measuring apparatus can correctly identify the points at which measured oven-widths are abnormal because the measured oven-widths can be processed with the measuring positions outside the oven. The oven-width measuring apparatus also can analyze the measured values during the measurement, thereby reflecting the result of the analysis to the subsequent operation immediately. Furthermore, the oven-width measuring apparatus can carry out the measurement continuously for long time without an excessive temperature rise because the endothermic box is provided with an outlet for discharging the liquid therein. The oven-width measuring apparatus has an improved workability that the measurement can be carried out continuously without opening the endothermic box because the endothermic box is provided with a charging cable connection plug.

## Claims

1. An oven-width measuring apparatus for measuring the distance between oven walls facing each other in an oven chamber, wherein a measuring unit for measuring the distance includes an oven-width measuring instrument and a power supply unit, and is accommodated in an endothermic box the outside of which is covered with heat insulating material.

2. The oven-width measuring apparatus of claim 1, wherein said endothermic box is a jacket in which liquid is filled, and the liquid has endothermic ability.

3. The oven-width measuring apparatus of claim 2, wherein said endothermic box is provided with an inlet, at the top thereof, from which said liquid is injected, and is provided with an outlet, at the bottom thereof, from which said liquid is discharged.

4. The oven-width measuring apparatus of claim 2 or 3, wherein said liquid is water.

5. The oven-width measuring apparatus of any one of claims 1 to 4, wherein said oven-width measuring instrument is a pair of laser distance meters each measuring the distance to the corresponding oven wall.

6. The oven-width measuring apparatus of claim 5, wherein a narrow-band interference optical filter is disposed forward of the laser light receiving window of each of said laser distance meters.

7. The oven-width measuring apparatus of claim 5 or 6, wherein said laser distance meter includes a timer to start the irradiation of laser light when the timer has counted up a preset value corresponding to the time required for mounting said oven-width measuring apparatus.

8. The oven-width measuring apparatus of any one of claims 1 to 7, wherein said measuring unit includes a wireless transmitter for transmitting measured oven-widths to an external data-recording unit.

9. The oven-width measuring apparatus of claim 8, wherein measured horizontal present positions are recorded in the external data-recording unit together with the measured oven-widths.

10. The oven-width measuring apparatus of any one of claims 1 to 7, wherein said measuring unit 2 includes a data-recording unit.

11. The oven-width measuring apparatus of claim 10, wherein said data-recording unit 9 starts to record the measured value when the measured value is a preset value corresponding to the oven-width.

12. The oven-width measuring apparatus of claim 10 or 11, wherein said measuring unit includes a wireless receiver for receiving a measuring start time and measuring positions transmitted from outside the measuring unit.

13. The oven-width measuring apparatus of any one of claims 1 to 12, wherein a charging cable connecting plug for charging said power supply unit is provided at the outside of said endothermic box.

14. The oven-width measuring apparatus of any one of claims 1 to 13, wherein the oven-width of a coke oven chamber is measured.

15. The oven-width measuring apparatus of claim 14 being mounted on the ram or the ram beam of a coke pusher to measure the oven-width while the coke pusher is traveling horizontally.

16. The oven-width measuring apparatus of any one of claims 5 to 13, wherein said external data-recording unit or said data-recording unit records the distance between each of the laser distance meters and the corresponding oven wall.

17. A method of measuring the oven-width of an oven by using the oven-width measuring apparatus of any one of claims 3 to 16, wherein said outlet is opened after the measurement of the oven-width of one oven chamber to discharge the liquid in said endothermic box, and then new liquid is injected into said endothermic box to measure the oven-width of the next oven chamber.

18. A method of measuring the width of an oven by using the oven-width measuring apparatus of any one of claims 3 to 16, wherein said power supply unit is charged after the measurement of the oven-width of one oven chamber, and then the oven-width of the next oven chamber is measured.
